Europäisches Patentamt

European Patent Office

Office européen des brevets

(11) Publication number: **0 404 368** A2

# EUROPEAN PATENT APPLICATION

(21) Application number: **90305858.4**

(51) Int. Cl.⁵: **C08L 23/04, C08J 5/18**

(22) Date of filing: **30.05.90**

(30) Priority: **02.06.89 CA 601565**

(43) Date of publication of application:
**27.12.90 Bulletin 90/52**

(84) Designated Contracting States:
**AT BE CH DE DK ES FR GB IT LI LU NL SE**

(71) Applicant: **UNIPLAST INDUSTRIES INC.**
**301, Forest Avenue, P.O. Box 2000**
**Orillia, Ontario L3V 6R9(CA)**

(72) Inventor: **Douse, Peter David**
**19 Brant Street East**
**Orillia, Ontario L3V 1Y7(CA)**

(74) Representative: **Votier, Sidney David et al**
**CARPMAELS & RANSFORD 43, Bloomsbury**
**Square**
**London WC1A 2RA(GB)**

(54) **Blends of linear low density polyethylene and low density polyethylene and films for shrink-wrapping therefrom.**

(57) A new film for shrink-wrapping and a method for its manufacture are provided. The film comprises a blend of linear low density polyethylene in the range of 50 to 95 weight per cent with 50 to 5 weight per cent of low density polyethylene.

EP 0 404 368 A2

# BLENDS OF LINEAR LOW DENSITY POLYETHYLENE AND LOW DENSITY POLYETHYLENE AND FILMS FOR SHRINK-WRAPPING THEREFROM

## INVENTION

This invention relates to film compositions suitable for shrink-wrapping articles and processes for their production and use.

## BACKGROUND TO THE INVENTION

Films for shrink wrapping articles have as a general rule been comprised wholly of low density polyethylene (LPDE) or a composition of low density polyethylene (LPDE) and a linear low density polyethylene (LLPDE) in which the low density polyethylene comprised the majority component. Orientation in shrink films is controlled by the blow-up ratio (BUR). In shrink bundling applications and smaller BUR ratios, 1.5 to 1.8, are normal to achieve the unidirectional shrink orientation, and larger BUR ratios, 2.5 to 3.5, are used for balanced shrink applications. BUR (blow-up ratio) is the ratio of the bubble diameter to the die diameter in the blown films.

With the introduction of linear low density polyethylene resins (LLDPE), blends of these resins with low density polyethylene (LDPE) were employed to provide films of increased tear and impact resistance and reduced gauge.

Films of 100% LLDPE resins have a high shrinkage ratio in the machine direction (MD) and expand in the transverse direction (TD). Variations in BUR do not have any appreciable effect on the shrink orientation of these LLDPE films. These characteristics led to perceived limits in the blends of LLDPE and LPDE to 25:75% ratios in shrink films. Uneven shrink and unwanted orientations appeared with 35% and 45% proportions of LLPDE. For the purposes of this invention the term linear low density polyethylene refers to copolymers of ethylene and an alpha-olefin having 3 to 10 carbon atoms and a high pressure low density polyethylene as said herein refers to a highly branched ethylene homopolymer produced on a high pressure tubular or autoclave process.

## SUMMARY OF THE PRESENT INVENTION

The resin blends of the present invention for use in the production of shrink films are from 50 weight per cent LLDPE to 95 weight per cent LLDPE with the balance being LDPE together with in certain blends, an added antiblock.

These compositions of the present invention have greater strength and permit the use of films of reduced gauge relative to the conventional film gauge in any particular application.

The resin blends were formed into films in the conventional manner with the films being made by blown film extrusion to obtain films from 0.0012 inches to 0.0014 inches thickness. In the experiments which were carried out all films were 19 inches wide and 0.0013 inches thick. The resins which were employed were as follows:

| Manufacturer and Name | Type | Melt Index | Density |
|---|---|---|---|
| Dow Chemical U.S. 4001 LLDPE | Octene | 1.0 | 0.912 |
| Dow Canada 2075 LLDPE | Octene | 1.0 | 0.920 |
| Dupont Canada 13J4 LLDPE | Octene | 1.0 | 0.929 |
| Esso Canada 3010 LLDPE | Hexene | 0.8 | 0.918 |
| Esso Canada 0184.94 LLDPE | Hexene | 0.8 | 0.926 |
| Dupont Canada 11D LLDPE | Butene | 0.8 | 0.918 |
| Dow Canada 84629.11 LDPE (Blending resin for the LLDPE) | | 0.8 | 0.923 |

The LDPE employed in each of the experiments was a homopolymer of polyethylene.

As those skilled in the art are aware other conventional LDPE and EVA modified LDPEs may be substituted with predictable changes in the characteristics of the final product.

In the 2075 blends 2% of antiblock (1000 ppm of SiO2) were added to the resin blend.

A series of runs using various LLDPE and LDPE blends were made and tested for their physical characteristics and these, illustrate the invention, by way of example in Table 1.

## TABLE I

| Resin Density (g/cc) | LLDPE in Blend (%) | LLDPE Type | BUR | Dart Impact Resistance (g) | MD/TD Tear Resistance (g) |
|---|---|---|---|---|---|
| .929 | 50 | Octene | 1.7 | 88 | 138/1198 |
| .929 | 50 | Octene | 2.7 | 98 | 144/774 |
| .929 | 50 | Octene | 3.5 | 104 | 160/634 |
| .929 | 70 | Octene | 1.7 | 83 | *99/>1600 |
| .929 | 70 | Octene | 2.7 | 98 | *102/1018 |
| .929 | 70 | Octene | 3.5 | 108* | *125/797 |
| .929 | 90 | Octene | 1.7 | 89 | 136/1142 |
| .929 | 90 | Octene | 2.7 | 112 | 154/893 |
| .929 | 90 | Octene | 3.5 | 118 | 157/694 |
| .920 | 50 | Octene | 1.7 | 123 | 147/874 |
| .920 | 50 | Octene | 2.7 | 173 | 186/778 |
| .920 | 50 | Octene | 3.5 | 183 | 192/688 |
| .920 | 70 | Octene | 1.7 | 173 | 147/1066 |
| .920 | 70 | Octene | 2.7 | 188 | 230/912 |
| .920 | 70 | Octene | 3.5 | 213 | 285/861 |
| .920 | 90 | Octene | 1.7 | 212 | 227/1002 |
| .920 | 90 | Octene | 2.7 | 233 | 342/912 |
| .920 | 90 | Octene | 3.5 | 263 | 432/950 |
| .912 | 50 | Octene | 1.7 | 143 | 118/880 |
| .912 | 50 | Octene | 2.7 | 188 | 173/896 |
| .912 | 70 | Octene | 1.7 | 197 | 206/931 |

## TABLE I Continued

| Resin Density (g/cc) | LLDPE in Blend (%) | LLDPE Type | BUR | Dart Impact Resistance (g) | MD/TD Tear Resistance (g) |
|---|---|---|---|---|---|
| .912 | 70 | Octene | 2.7 | 215 | 286/910 |
| .912 | 90 | Octene | 1.7 | 308 | 365/1050 |
| .926 | 50 | Hexene | 1.7 | 78 | 154/798 |
| .926 | 50 | Hexene | 2.7 | 113 | 179/704 |
| .926 | 50 | Hexene | 3.5 | 173 | 208/672 |
| .926 | 70 | Hexene | 1.7 | 102 | 206/854 |
| .926 | 70 | Hexene | 2.7 | 123 | 192/861 |
| .926 | 70 | Hexene | 3.5 | 178 | 240/736 |
| .926 | 70 | Hexene | 1.7 | 153 | 150/1014 |
| .926 | 90 | Hexene | 2.7 | 173 | 227/806 |
| .926 | 90 | Hexene | 3.5 | **213 | 304/790 |
| .918 | 50 | Hexene | 1.7 | 98 | 112/736 |
| .918 | 50 | Hexene | 2.7 | 168 | 179/768 |
| .918 | 50 | Hexene | 3.5 | 173 | 230/643 |
| .918 | 70 | Hexene | 1.7 | 168 | 133/1145 |
| .918 | 70 | Hexene | 2.7 | 178 | 152/866 |
| .918 | 70 | Hexene | 3.5 | **203 | 234/864 |
| .918 | 90 | Hexene | 1.7 | 188 | 279/1096 |
| .918 | 90 | Hexene | 2.7 | 213 | 368/986 |
| .918 | 90 | Hexene | 3.5 | **258 | 442/871 |
| .918 | 50 | Butene | 1.7 | 88 | **243/1053 |

## TABLE I Continued

| Resin Density (g/cc) | LLDPE in Blend (%) | LLDPE Type | BUR | Dart Impact Resistance (g) | MD/TD Tear Resistance (g) |
|---|---|---|---|---|---|
| .918 | 50 | Butene | 2.7 | 123 | 208/707 |
| .918 | 50 | Butene | 3.5 | 148 | 230/576 |
| .918 | 70 | Butene | 1.7 | *62 | **234/1190 |
| .918 | 70 | Butene | 2.7 | *103 | 224/771 |
| .913 | 70 | Butene | 3.5 | 143 | 307/771 |
| .918 | 90 | Butene | 1.7 | 113 | 317/896 |
| .918 | 90 | Butene | 2.7 | 148 | 330/730 |
| .918 | 90 | Butene | 3.5 | 168 | 397/726 |

NOTE:   MD-machine direction, TD-transverse direction
NOTE:   *  light in gauge - 1.2 mil
        ** heavy in gauge - 1.4 mil

The tests were carried out on an Elmendorf tear tester and dart drop apparatus conforming to ASTM standards.

The shrink tests were performed on a Tetra Pak Model #674851 production shrink line. The line consisted of a conveyer which moves the cases into a pusher, which in turn moves the case into the curtain of polyethylene. One roll of polyethylene is used for the top of the case and the other is used for the bottom. They are sealed together at the front and the back of the case by a heat sealer bar. A double row of perforations are put into the top film as an easy open feature and also serves to let the air between the film and case escape when it goes through the shrinking stage. Another conveyer moves the case with the loose wrap of film on it through a heat tunnel which shrinks the film tight. The tunnel has a series of heaters with fans to circulate the hot air evenly around the package while it moves along the conveyer.

The variables on the shrink line are sealer dwell time, conveyer line speed through the tunnel, seal power and tunnel temperature. For this study, line speed and dwell time were kept constant and tunnel temperature and seal power were adjusted where required.

The line speed was maintained at 38 ft/min. and the dwell time at 1.5 sec.

Seal Bar Power was set at the following powers:
55% for the 50% LLDPE blends
67% for the 70% LLDPE blends
75% for the 90% LLDPE blends

Tunnel Temperature was 135 deg C to 150 deg C depending on the percentage LLDPE in the blend and the density of the LLDPE. The lower density of the film the lesser temperature was required.

From the foregoing it will be observed that a shrink film with improved characteristics can be provided at a more economical price than heretofore considered practicable.

## Claims

1. A film composition suitable for shrink-wrapping articles comprising a blend of: 50 to 95 weight per cent of a linear low density polyethylene having a copolymer of 3 to 10 carbon atoms; and 50 to 5 % of a high pressure low density polyethylene.

2. The composition of Claim 1 further including an antiblock agent.

3. The composition of Claim 1 wherein said linear low density polyethylene is octene.

4. The composition of Claim 1 wherein said linear low density polyethylene is hexene.

5

5. The composition of Claim 1 wherein said linear low density polyethylene is butene.

6. The composition of Claim 1 which has a density in the range of .910 to .930 g/cc and a blow-up ratio in the range of 1.6 to 3.6.

7. The composition of Claim 1 wherein the linear low density polyethylene comprises 65 - 85% hexene with a density in the range of .918 g/cc to .926 and blow up ratio in range 2.7 to 3.6.

8. The composition of Claim 1 wherein the linear low density polyethylene present is octene in the ratio of 65 - 85% and the film produced therewith has a density in the range of .912 g/cc to .930 at a blow up ratio in range of 1.6 to 3.6.

9. A method of manufacturing a film suitable for shrink-wrapping which comprises blending a mixture of resins comprising or form about 50 to 90 weight per cent of a linear low density polyethylene, extruding such mixture at a blow-up ratio in the range 1.6 to 3.6 to provide a film having a density in the range .910 to .930 g/cc.